# EUROPEAN PATENT SPECIFICATION

(11) **EP 3 061 737 B1**
(45) Date of publication and mention of the grant of the patent: **17.07.2019**
(21) Application number: 16157183.1
(22) Date of filing: 24.02.2016
(51) Int. Cl.: C04B 35/573, C04B 35/80, C04B 38/00

(54) **CERAMIC MATRIX COMPOSITE ARTICLES AND METHODS FOR FORMING SAME**
KERAMISCHE MATRIX-VERBUNDWERKSTOFFGEGENSTÄNDE UND VERFAHREN ZUR HERSTELLUNG DAVON
ARTICLES COMPOSITES À MATRICE CÉRAMIQUE ET PROCÉDÉS DE FORMATION DE CEUX-CI

(30) Priority: 26.02.2015 US 201514632333
(43) Date of publication of application: 31.08.2016
(73) Proprietor: General Electric Company, Schenectady, NY 12345 (US)
(72) Inventor: STEIBEL, James Dale, Niskayuna, NY 12309 (US)
(74) Representative: Openshaw & Co.

(56) References cited:
- EP-A1- 2 248 786
- EP-A2- 0 798 280
- US-A1- 2012 076 927
- US-B1- 7 687 016

## Description

### TECHNICAL FIELD

The present disclosure generally relates to ceramic matrix composites (CMC), and more particularly, to articles and methods for forming ceramic matrix composite articles.

### BACKGROUND

Ceramic matrix composites generally include a ceramic fiber reinforcement material embedded in a ceramic matrix material. The reinforcement material serves as the load-bearing constituent of the CMC in the event of a matrix crack, while the ceramic matrix protects the reinforcement material, maintains the orientation of its fibers, and serves to dissipate loads to the reinforcement material. Of particular interest to high-temperature applications, such as in gas turbines, are silicon-based composites, which include silicon carbide (SiC) as the matrix and/or reinforcement material.

Different processing methods have been employed in forming CMCs. For example, one approach includes melt infiltration (MI), which employs a molten silicon to infiltrate into a fiber-containing perform. CMCs formed by MI are generally fully dense, e.g., having generally zero residual porosity. Another approach for forming CMCs is chemical vapor infiltration (CVI). CVI is a process whereby a matrix material is infiltrated into a fibrous preform by the use of reactive gases at elevated temperature to form the fiber-reinforced composite. Generally, limitations introduced by having reactants diffuse into the preform and by-product gases diffusing out of the perform result in relatively high residual porosity of between about 10 percent and about 15 percent in the composite. In particular, typically in forming CMCs using CVI, the outer portion of the composite formed by CVI typically has a lower porosity than the porosity of the inner portion of the composite. Another approach for forming CMCs includes initially employing a partial CVI process followed by a MI process. This approach usually yields lower residual porosity of between about 5 percent and about 7 percent.

There is a need for further ceramic matrix composites (CMC), and more particularly, to articles and methods for forming ceramic matrix composite articles having.

EP 0 798 280 A2 discloses a ceramic matrix composite article having composite substrate and a composite outer layer. The content of free silicon of the composite article may be 10 vol.% or less. A surface layer containing silicon carbide, molybdenum silicide based compound and silicon nitride may be provided.

### SUMMARY

The present disclosure provides, in a first aspect, a ceramic matrix composite article as defined in claim 1.

The present disclosure provides, in a second aspect, a method for forming a ceramic matrix composite article, as defined in claim 12.

### DRAWINGS

The foregoing and other features, aspects and advantages of this disclosure will become apparent from the following detailed description of the various aspects of the disclosure taken in conjunction with the accompanying drawings, wherein:
FIG. 1 is a cross-sectional view of a ceramic matrix composite article in accordance with aspects of the present disclosure having a ceramic matrix composite substrate and a ceramic matrix composite outer layer;
FIG. 2 cross-sectional view of the ceramic matrix composite substrate of the ceramic matrix composite article of FIG. 1;
FIG. 3 is a cross-sectional view of the ceramic matrix composite substrate of FIG. 2 with the ceramic matrix composite outer layer;
FIG. 4 is a cross-sectional view of a CMC article in accordance with aspects of the present disclosure having a ceramic matrix composite substrate and a ceramic matrix composite outer layer;
FIG. 5 is a perspective view of a CMC article in accordance with aspects of the present disclosure having a ceramic matrix composite substrate and a ceramic matrix composite outer layer;
FIG. 6 is a cross-sectional view of a portion of a CMC turbine shroud in accordance with aspects of the present disclosure having a ceramic matrix composite substrate and a ceramic matrix composite outer layer;
FIG. 7 is an exploded perspective view of a turbine blade in accordance with aspects of the present disclosure having a ceramic matrix composite substrate and a ceramic matrix composite outer layer;
FIG. 8 is an exploded perspective view of a portion of a turbine nozzle in accordance with aspects of the present disclosure having a ceramic matrix composite substrate and a ceramic matrix composite outer layer; and
FIG. 9 is a flowchart of a method for forming a CMC article having a ceramic matrix composite substrate and a ceramic matrix composite outer layer in accordance with aspects of the present disclosure.

### DETAILED DESCRIPTION

The detailed description facilitates the explanation of certain aspects of the disclosure, and should not be interpreted as limiting the scope of the disclosure. Accordingly, a value modified by a term or terms, such as "about," is not limited to the precise value specified. In some instances, the approximating language may correspond to the precision of an instrument for measuring the value. When introducing elements of various embodiments, the articles "a," "an," "the," and "said" are intended to mean that there are one or more of the elements. The terms "comprising," "including," and "having" are intended to be inclusive and mean that there may be additional elements other than the listed elements. As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable. Any examples of operating parameters are not exclusive of other parameters of the disclosed embodiments.

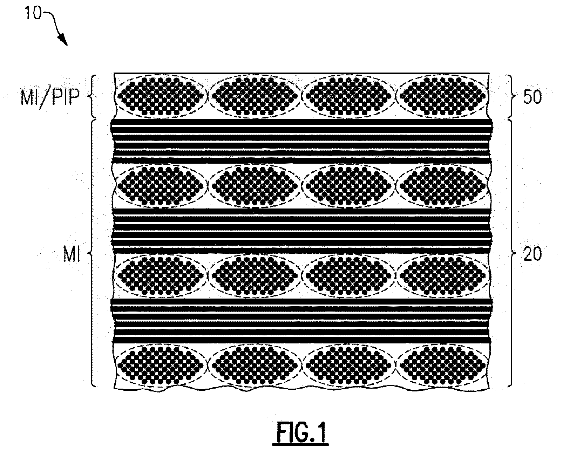

Generally, the present disclosure is directed to a ceramic matrix composite (CMC) articles having generally good mechanical properties such as tensile and/or compressive strength, along with increased creep resistance such as resistance to deformation or change in shape over time due to stress and/or increased temperature capability. For example, a CMC article may include a CMC substrate and an outer CMC skin or layer. The CMC substrate and the outer CMC skin or layer may have different properties allowing tailoring of the CMC article to result in a CMC article having generally good mechanical properties with increased creep resistance (resistance to deformation or change in shape over time due to stress) and/or increased temperature capability. The technique of the present disclosure results in both the CMC substrate and the CMC outer layer being CMCs having a reinforcing material, and thus both the CMC substrate and the CMC outer layer offering mechanical properties such as tensile and/or compressive strength. In addition, the CMC outer layer may also offer increased creep resistance and/or increased temperature capability to the CMC article. Such a technique of the present disclosure may be advantageous in CMC components where surface stresses are high and where creep is typically a problem, and/or where high temperatures are experienced. For example, many turbine components have thermal and mechanical stresses that simulate a bending condition. In bending, the in-plane stresses are highest at the surfaces. Thus, placing a more creep resistant material and temperature FIG. 1 illustrates a CMC article 10 having a CMC substrate 20 and a CMC skin or outer layer 50 in accordance with aspects of the present disclosure. As described in greater detail below, CMC substrate 20 includes a ceramic fiber reinforcement material in a ceramic matrix material having a first free silicon proportion or content (e.g., the amount of free silicon relative to the substrate as a whole), and CMC outer layer 50 includes a ceramic fiber reinforcement material in a ceramic matrix material disposed on an outer surface of at least a portion of the CMC substrate. CMC outer layer 50 includes a second free silicon proportion or content (e.g., the amount of free silicon relative to the outer layer as a whole) less than the first free silicon proportion of content. CMC substrate 20 may be a silicon rich silicon carbide substrate having between 5 percent and 30 percent free silicon by volume. CMC substrate 20 has full density, or no porosity (e.g., 0 percent). CMC outer layer 50 comprises less than 5 percent by volume (e.g., 0 percent), generally no or zero free silicon content (e.g., about 0 percent), or slightly carbon rich silicon carbide (e.g. a ratio of 0.995 silicon to 1.005 carbon). CMC outer layer 50 has a porosity between 5 percent to 30 percent, between about 5 percent and about 10 percent, or about 10 percent to about 20 percent.

CMC substrate 20 may be formed by a first process and CMC outer layer 50 may be formed by a second process different from the first process. The CMC substrate is formed by using a melt infiltration process, and the outer layer may be formed using a melt infiltration process or a polymer impregnation and pyrolysis process. Outer layer 50 may have better creep resistance than substrate 20 and may result in CMC article 10 having a creep resistance greater than a creep resistance of a CMC article not having outer layer 50. CMC outer layer 50, which may have no free elemental silicon, may have better temperature capabilities (e.g., higher than the melting point of silicon) compared to CMC substrate 20 (which may include free silicon) and may result in CMC article 10 having temperature capabilities greater than temperature capabilities of a CMC article not having outer layer 50.

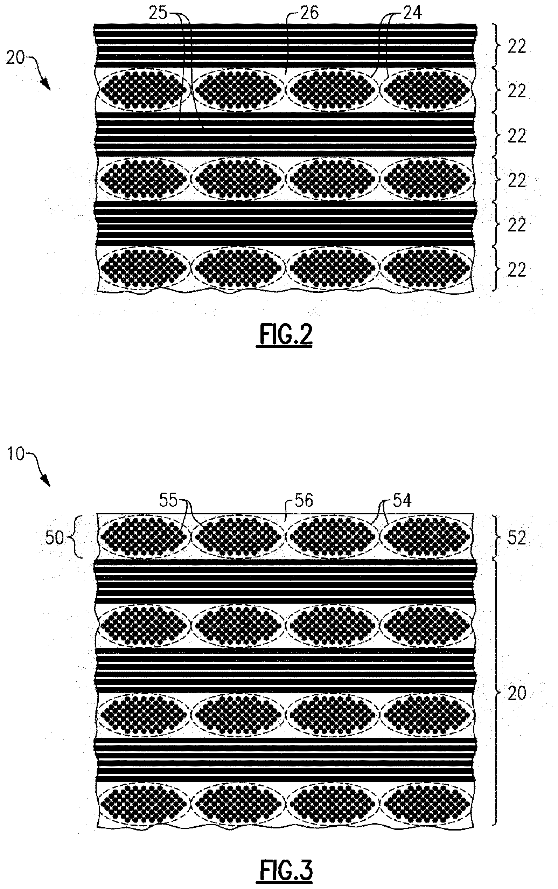

With reference to FIG. 2, CMC article 10 (FIG. 1) may include initially forming CMC substrate 20. A surface region of CMC substrate 20 may include multiple laminae 22, each derived from an individual prepreg that includes unidirectionally-aligned tows 24 of fibers 25 impregnated with a ceramic matrix precursor. As a result, each lamina 22 contains unidirectionally-aligned fibers 25 encased in a ceramic matrix 26 formed by conversion of the ceramic matrix precursor during firing and melt infiltration.

For example, CMC substrate 20 may be fabricated from multiple layers of "prepreg," often in the form of a tape-like structure, comprising the reinforcement material of the desired CMC impregnated with a precursor of the CMC matrix material. The prepreg may undergo processing (including firing) to convert the precursor to the desired ceramic. The prepregs may be continuous fiber reinforced ceramic composite (CFCC) materials and may include a two-dimensional fiber array comprising a single layer of unidirectionally-aligned tows impregnated with a matrix precursor to create a generally two-dimensional laminate. Multiple plies of the resulting prepregs are stacked and debulked to form a laminate preform, a process referred to as "lay-up." The prepregs may be arranged so that tows of the prepreg layers are oriented transverse (e.g., perpendicular) or at an angle to each other, providing greater strength in the laminar plane of the preform (corresponding to the principal (load-bearing) directions of the final CMC component).

Following lay-up, the laminate preform may undergo debulking and curing while subjected to applied pressure and an elevated temperature, such as in an autoclave. In the case of melt-infiltrated (MI), the debulked and cured preform undergoes additional processing. First, the preform may be heated in vacuum or in an inert atmosphere in order to decompose the organic binders, at least one of which pyrolyzes during this heat treatment to form a carbon char, and produces a porous preform for melt infiltration. Further heating, either as part of the same heat cycle as the binder burn-out step or in an independent subsequent heating step, the preform is melt infiltrated, such as with molten silicon supplied externally. The molten silicon infiltrates into the porosity, reacts with the carbon constituent of the matrix to form silicon carbide, and fills the porosity to yield the desired CMC substrate.

With reference to FIG. 3, CMC article 10 may include forming outer layer 50 on initially formed CMC substrate 20. For example, a lamina 52 may be derived from an individual prepreg that includes unidirectionally-aligned tows 54 impregnated with a ceramic matrix precursor. Lamina 52 contains unidirectionally-aligned fibers 55 encased in a ceramic matrix 56 formed by conversion of the ceramic matrix precursor during firing and melt infiltration (MI).

For example, CMC outer layer 50 may be fabricated from a layer of "prepreg," often in the form of a tape-like structure, comprising the reinforcement material of the desired CMC impregnated with a precursor of the CMC matrix material. The prepreg undergoes processing (including firing) to convert the precursor to the desired ceramic. The prepreg may be continuous fiber reinforced ceramic composite (CFCC) materials and may include a two-dimensional fiber array comprising a single layer of unidirectionally-aligned tows impregnated with a matrix precursor to create a generally two-dimensional laminate. A ply of the prepreg may be disposed on CMC substrate. The prepreg may be arranged so that tows of the prepreg layer are oriented transverse (e.g., perpendicular) or at an angle to the tows of the outermost layer of the CMC substrate.

The prepreg layer may undergo curing while subjected to applied pressure and an elevated temperature, such as in an autoclave or localized application of pressure and heat. In the case of melt infiltration, the prepreg layer disposed on the CMC substrate may be heated in vacuum or in an inert atmosphere in order to decompose the organic binders, at least one of which pyrolyzes during this heat treatment to form a carbon char, and produces a porous layer for melt inflitration. Further heating, either as part of the same heat cycle as the binder burn-out step or in an independent subsequent heating step, the layer is melt infiltrated, such as with molten silicon supplied externally. The molten silicon infiltrates into the porosity, reacts with the carbon constituent of the matrix to form silicon carbide, and fills the porosity to yield the desired CMC outer layer.

For forming CMC outer layer 50, a melt infiltration process may be the same or different compared to the melt infiltration process employed in forming CMC substrate 20. For example, employing the same melt infiltration process as applied to the substrate to the relatively thin outer later layer may result in outer layer 50 having a second free silicon content less than the first free silicon content of the substrate. Alternatively, the melt infiltration process may be tailored (e.g., reducing the time that the outer layer is disposed in the silicon bath compared to the forming of the substrate) so that the outer layer results in outer layer 50 having a second free silicon content less than the first free silicon content of the substrate.

In another embodiment, the CMC substrate and the CMC outer layer may be formed at the same time or at different times employing melt infiltration. For example, the prepregs for forming the substrate and outer layer may be different. The prepreg for the outer layer may be made with a prepreg that after melt infiltration consumes more of the free silicon resulting the outer layer having less free silicon compared to the free silicon content of the substrate. Such prepregs for the substrate may include carbon, and such prepregs for the outer layer may include additional reactive metals such as molybdenum or tantalum.

In another embodiment, the CMC substrate and the CMC outer layer may be formed at the same time employing a melt infiltration process. For example, after a melt infiltration process, a free silicon extraction process may be employed to remove the free silicon from the outermost layer or layers to define an outer layer having less free silicon content and greater porosity compared to the free silicon content and porosity of the substrate.

With reference again to FIG. 3, in another embodiment in accordance with the present disclosure, the substrate may be formed by melt infiltration, and CMC outer layer 50 may be formed by a polymer impregnation and pyrolysis (PIP) process. For example, a PIP process may include soaking the fiber perform with a liquid polymeric precursor, which is first cured (cross-linked) and later pyrolyzed, converting the polymer into ceramic. Selection of the specific fiber perform and liquid polymeric precursor may results in outer layer 50 having a free silicon content that is less than the free silicon content of the substrate.

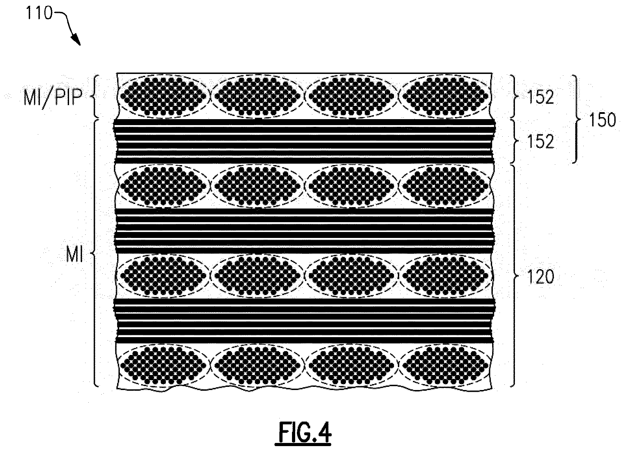

FIG. 4 illustrates a CMC article 110 having a CMC substrate 120 and a CMC skin or outer layer 150 in accordance with aspects of the present disclosure. CMC substrate 120 includes a ceramic fiber reinforcement material in a ceramic matrix material having a first free silicon proportion or content, and CMC outer layer 150 includes a ceramic fiber reinforcement material in a ceramic matrix material disposed on an outer surface of at least a portion of the CMC substrate. CMC outer layer 150 includes a second free silicon proportion or content less than the first free silicon proportion or content. CMC substrate 120 has between 5 percent and 30 percent free silicon by volume. CMC substrate 120 has no porosity.

CMC outer layer 150 is less than 5 percent by volume free silicon. CMC outer layer 150 has a porosity between 5 percent to 30 percent.

CMC substrate 120 may be formed by a first process and CMC outer layer 150 may be formed by a second process different from the first process. The CMC substrate is formed by using a melt infiltration process, and the outer layer may be formed using a melt infiltration process or a polymer impregnation and pyrolysis process. Outer layer 150 having better creep resistance than substrate 120 may result in CMC article 110 having a creep resistance greater than a creep resistance of a CMC article not having outer layer 150. CMC outer layer 150, which may have no free elemental silicon or silicon alloy, may have better temperature capabilities (e.g., higher than the melting point of silicon) compared to CMC substrate 120 (which may include free silicon) and may result in CMC article 110 having temperature capabilities greater than temperature capabilities of a CMC article not having outer layer 150.

CMC article 110 may include initially forming CMC substrate 120 in a similar manner as noted above in connection with forming substrate 20 (FIG. 2). With reference still to FIG. 4, CMC article 110 may include forming outer layer 150 on initially formed CMC substrate 120. For example, outer layer 150 may include a plurality of laminae 152, each derived from an individual prepreg that includes unidirectionally-aligned tows impregnated with a ceramic matrix precursor. Each lamina 152 may contain unidirectionally-aligned fibers encased in a ceramic matrix formed by conversion of the ceramic matrix precursor during firing.

For example, CMC outer layer 150 may be fabricated from a plurality of layers of "prepreg," often in the form of a tape-like structure, comprising the reinforcement material of the desired CMC impregnated with a precursor of the CMC matrix material. The prepreg undergoes processing (including firing) to convert the precursor to the desired ceramic. The prepregs may be continuous fiber reinforced ceramic composite (CFCC) materials and may include a two-dimensional fiber array comprising a single layer of unidirectionally-aligned tows impregnated with a matrix precursor to create a generally two-dimensional laminate. The plurality of plies of the resulting prepregs are stacked and debulked. The prepregs are typically arranged so that tows of the prepreg layers are oriented transverse (e.g., perpendicular) to each other or at an angle to the tows of the outermost layer of the CMC substrate.

The plurality of layers may typically undergo debulking and curing while subjected to applied pressure and an elevated temperature, such as in an autoclave or localized application of pressure and heat. In the case of melt infiltration, the debulked and cured plurality of layers disposed on the CMC substrate may be heated in vacuum or in an inert atmosphere in order to decompose the organic binders, at least one of which pyrolyzes during this heat treatment to form a carbon char, and produces a porous layer for melt infiltration. Further heating, either as part of the same heat cycle as the binder burn-out step or in an independent subsequent heating step, the porous layer is melt infiltrated, such as with molten silicon supplied externally. The molten silicon infiltrates into the porosity, reacts with the carbon constituent of the matrix to form silicon carbide, and fills the porosity to yield the desired CMC outer layer.

For forming CMC outer layer 150, a melt infiltration process may be the same or different compared to the melt infiltration process employed in forming CMC substrate 120. For example, employing the same melt infiltration process as applied to the substrate to the outer later layer may result in outer layer 150 having a second free silicon content less than the first free silicon content of the substrate. Alternatively, the melt infiltration process may be tailored (e.g., reducing the time of that the outer layer is disposed in the silicon bath compared to the forming of the substrate) so that the outer layer results in outer layer 150 having a second free silicon content is less than the first free silicon content of the substrate.

In another embodiment, the CMC substrate and the CMC outer layer may be formed at the same time or at different times employing melt infiltration. For example, the prepregs for forming the substrate and outer layer may be different. The prepreg for the outer layer may be made with a prepreg that after melt infiltration consumes more of the free silicon resulting the outer layer having less free silicon compared to the free silicon content of the substrate. Such prepregs for the substrate may include carbon, and such prepregs for the outer layer may include additional reactive metals such as molybdenum or tantalum.

In another embodiment, the CMC substrate and the CMC outer layer may be formed at the same time employing a melt infiltration process. For example, after a melt infiltration process, a free silicon extraction process may be employed to remove the free silicon from the outermost layer or layers to define an outer layer having less free silicon content and greater porosity compared to the free silicon content and porosity of the substrate.

With reference still to FIG. 4, in another embodiment in accordance with the present disclosure, the substrate may be formed by melt infiltration, and CMC outer layer 150 may be formed by a polymer impregnation and pyrolysis (PIP) process. For example, a PIP process may include soaking the fiber perform with a liquid polymeric precursor, which is first cured (cross-linked) and later pyrolyzed, converting the polymer into ceramic. Selection of the specific fiber perform and liquid polymeric precursor may results in outer layer 150 having a free silicon content that is less than the free silicon content of the substrate.

In the above embodiments, a material for the tows may be SiC fibers. An example of a material suitable for the tows is HI-NICALON® from Nippon Carbon Co., Ltd. A suitable range for the diameters of the fibers is about two to about twenty micrometers, though fibers with larger and smaller diameters are also within the scope of this disclosure. The fibers may be preferably coated with materials to impart certain desired properties to the CMC substrate and/or CMC outer layer, such as a carbon or boron nitride interface layer (not shown). Those skilled in the art will appreciate that the teachings of this disclosure are also applicable to other CMC material combinations, and that such combinations are within the scope of this disclosure.

As described above, the CMC outer layer formed by a melt infiltration or a polymer impregnation and pyrolysis-process having little or no free silicon phase may result in the CMC outer layer having greater creep resistance and/or temperature capability than the CMC substrate formed by MI and having no porosity. In addition, the CMC substrate such as formed by a silicon melt infiltration may result in a silicon rich silicon carbide substrate having, for example, 5 percent, 10 percent, 15 percent, 20 percent, 30 percent, or greater free silicon by volume. The CMC outer layer has less than 5 percent by volume of elemental silicon. The CMC outer layer has a porosity of between 5 percent to 30 percent. The thickness of the plies or unidirectional tape for forming the CMC article may be about 0,127 mm (0.005 inch) to about 0,254 mm (0.010 inch). The CMC article may be formed having a single ply or layer of reinforcement fibers, a plurality of plies or layers of reinforcement fibers, or multiple plies or layers of reinforcement fibers for forming the CMC outer layer. For example, the CMC article of the present disclosure may comprise a CMC substrate formed from about eight plies or layers of reinforcement fibers and melt infiltration, and an outer layer formed from one or two plies or layers of reinforcement fibers so that the outer layer may be about 10 percent to about 25 percent of the thickness of the CMC article. In other embodiments of the ceramic matrix composite article, the outer layer may be about 10 percent to about 50 percent of the thickness of the ceramic matrix composite article. In other embodiments, the CMC article may have about 50 to about 100 plies. It will be appreciated that other configurations of the number of plies and thickness of the CMC substrate relative to the CMC outer layer are also possible.

While the CMC article may be formed from unidirectional prepreg tapes, it will be appreciated that woven prepreg tape may be employed to form the CMC substrate and/or the CMC outer layer. The aligned fibers in the unidirectional prepreg tape may result in fewer pores than that resulting from a prepreg woven fiber fabric. In addition, one or more additional layers or coatings may be formed on the CMC outer layer of the CMC article. For example, in some embodiments, an environmental barrier coating (EBC) system may be formed on the outer layer.

In addition, the substrate and/or the outer layer may be formed by a slurry cast melt infiltration process, for example, employing a slurry of carbon, carbon-containing resin, or other carbonaceous material, and, optionally, silicon carbide particulate, which is introduced into the porosity of a fibrous perform, and molten silicon is thereafter infiltrated into the remaining space to react with the carbonaceous material to form silicon carbide. The fibrous perform may be formed from a woven material.

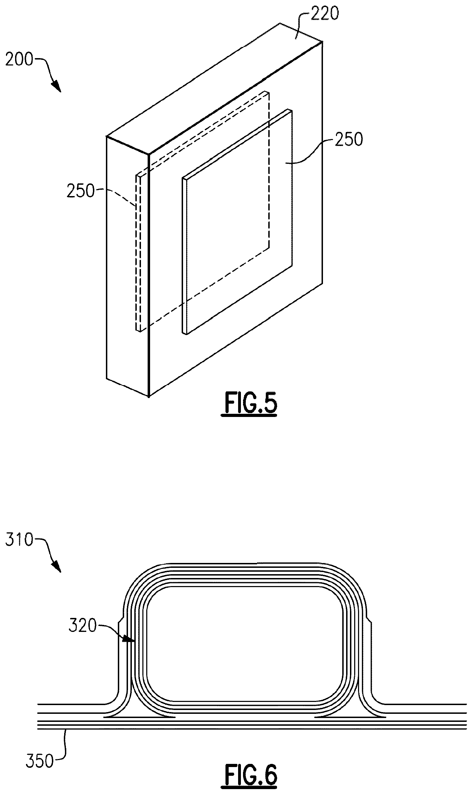

FIG. 5 illustrates a CMC article 210 having a ceramic matrix composite substrate 220 and opposite ceramic matrix composite outer layers 250 in accordance with aspects of the present disclosure. CMC outer layer 250 may extend over the entire CMC substrate or only over a portion of CMC substrate 220 such as on one side and on both sides of a substrate. Substrate 220 and outer layer 250 may be similarly formed and have the characteristics of substrate 20 (FIG. 3) and 120 (FIG. 4), and outer layer 50 (FIG. 3) and 150 (FIG. 4) as described above.

FIG. 6 is a cross-sectional view of a portion of a CMC turbine shroud 310 having a ceramic matrix composite substrate 320 and a ceramic matrix composite outer layer 350 in accordance with aspects of the present disclosure. For example, outer layer 350 is disposed adjacent to hot flow gas of a turbine. Substrate 320 and outer layer 350 may be similarly formed and have the characteristics of substrate 20 (FIG. 3) and 120 (FIG. 4), and outer layer 50 (FIG. 3) and 150 (FIG. 4) as described above.

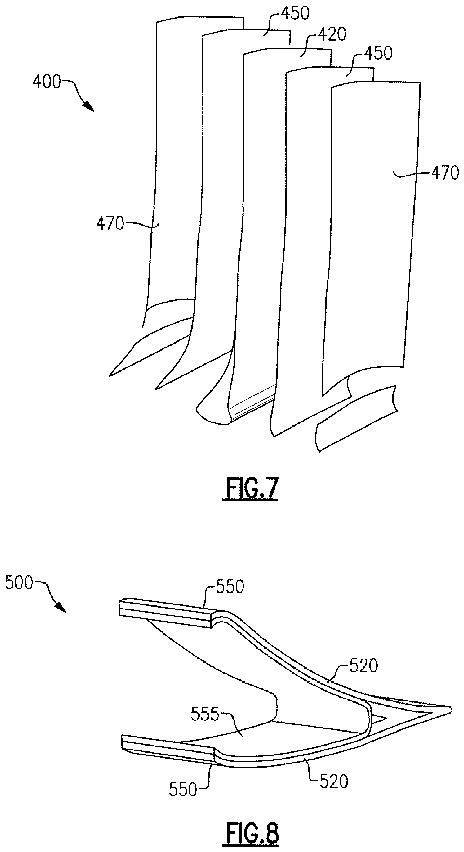

FIG. 7 is an exploded perspective view of a turbine blade 400 having a ceramic matrix composite substrate 420, a ceramic matrix composite outer layer 450, and an environmental barrier layer system 470 in accordance with aspects of the present disclosure generally. Substrate 420 and outer layer 450 may be similarly formed and have the characteristics of substrate 20 (FIG. 3) and 120 (FIG. 4), and outer layer 50 (FIG. 3) and 150 (FIG. 4) as described above.

FIG. 8 is a perspective view of a portion of a turbine nozzle 500 having a ceramic matrix composite substrate 520, a first ceramic matrix composite outer layer 550, and a second ceramic matrix composite outer layer 455 in accordance with aspects of the present disclosure generally. The first outer layer 450 may wrap around the trailing edge of the nozzle. Substrate 520 and outer layer 550 may be similarly formed and have the characteristics of substrate 20 (FIG. 3) and 120 (FIG. 4), and outer layer 50 (FIG. 3) and 150 (FIG. 4) as described above.

As noted above, generally CMC articles formed solely using uniform performs and melt infiltration have attractive features including a full density and mechanical properties. However, due to free silicon resulting from melt infiltration, at temperatures over about 1,300 degrees Celsius (about 2,400 degrees Fahrenheit), the creep resistance of the matrix is poor which manifests itself in poor creep rupture and Sustained Peak Low Cycle Fatigue (SPLCF) strengths. At temperatures over about 1,400 degrees Celsius (about 2,550 degrees Fahrenheit), the free silicon melts. CMC articles formed solely using chemical vapor infiltration contain significant porosity which leads to poor interlaminar properties and poor oxidation resistance.

From the present description, it will be appreciated that the techniques of the present disclosure overcome the problems associated with CMC articles formed solely from a uniform perform using melt infiltration or by chemical vapor infiltration by providing a CMC skin or outer layer that offer increased creep resistance and/or increased temperature capability to the CMC article. The proposed technique of the present disclosure may increase the temperature limit of current MI ceramic matrix composites from about 1,300 degrees Celsius (about 2,400 degrees Fahrenheit) to temperatures above the melting temperature of silicon, approximately 1,414 degrees Celsius (approximately 2,577 degrees Fahrenheit). For example, present technique may offer the potential to increase the temperature capability of CMC composites by between about 90 degrees Celsius (about 200 degrees Fahrenheit) and about 150 degrees Celsius (about 300 degrees Fahrenheit). This may be possible where the article is used in a thermal gradient where the substrate is maintained below about 1,370 degrees Celsius (about 2500 degrees Fahrenheit) but the outer surface is allowed to exceed this temperature, such as in a turbine shroud. This temperature capability may lead to reduction in Specific Fuel Consumption (SFC) of several percent for aircraft engines, and thus, reduction in fuel and expenses for the airlines.

Such a technique of the present disclosure may be advantageous for application to ceramic or silicon-bearing turbine components, for example, turbine blades, vanes, nozzles, shrouds, etc.

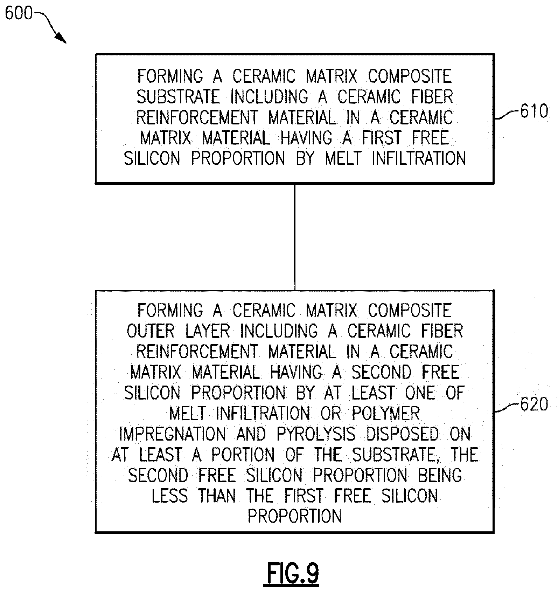

FIG. 9 illustrates a method 600 for forming a ceramic matrix composite article. The method includes, at 610, forming a ceramic matrix composite substrate comprising a ceramic fiber reinforcement material in a ceramic matrix material having a first free silicon proportion by melt infiltration, and at 620, forming a ceramic matrix composite outer layer comprising a ceramic fiber reinforcement material in a ceramic matrix material having a second free silicon proportion by melt infiltration or polymer impregnation and pyrolysis disposed on at least a portion of the substrate. The second free silicon proportion being less than the first free silicon proportion.

In other embodiments of the present disclosure, a ceramic matrix composite article includes a ceramic matrix composite substrate comprising a ceramic fiber reinforcement material in a ceramic matrix material having a first free silicon proportion, a ceramic matrix composite outer layer comprising a ceramic fiber reinforcement material in a ceramic matrix material having a second free silicon proportion disposed on an outer surface of at least a portion of the substrate, and the second free silicon proportion being less than the first free silicon proportion.

In other embodiments of the present disclosure ceramic matrix composite article may include a ceramic matrix composite substrate comprising ceramic fiber reinforcement material in a ceramic matrix material having a first porosity, and a ceramic matrix composite outer layer comprising ceramic fiber reinforcement material in a ceramic matrix material having a second porosity disposed on at least a portion of the substrate. The second porosity is greater than the first porosity.

In other embodiments of the present disclosure ceramic matrix composite article may include a ceramic matrix composite substrate comprising ceramic fiber reinforcement material in a ceramic matrix material having a first creep resistance, and a ceramic matrix composite outer layer comprising ceramic fiber reinforcement material in a ceramic matrix material having a second creep resistance disposed on at least a portion of the substrate. The second creep resistance is greater than the first creep resistance.

It is to be understood that the above description is intended to be illustrative, and not restrictive. Numerous changes and modifications may be made herein by one of ordinary skill in the art without departing from the general spirit and scope of the disclosure as defined by the following claims. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Also, the term "operably" in conjunction with terms such as coupled, connected, joined, sealed or the like is used herein to refer to both connections resulting from separate, distinct components being directly or indirectly coupled and components being integrally formed (i.e., one-piece, integral or monolithic). It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the disclosure has been described in detail in connection with only a limited number of embodiments, it should be readily understood that the disclosure is not limited to such disclosed embodiments. Additionally, while various embodiments have been described, it is to be understood that aspects of the disclosure may include only some of the described embodiments. Accordingly, the disclosure is not to be seen as limited by the foregoing description, but is only limited by the scope of the appended claims.

This written description uses examples, including the best mode, and also to enable any person skilled in the art to practice the disclosure, including making and using any devices or systems and performing any incorporated methods. The patentable scope of the disclosure is defined by the claims.

## Claims

1. A ceramic matrix composite article (10) comprising:
a melt infiltration ceramic matrix composite substrate (20) comprising a ceramic fiber reinforcement material in a ceramic matrix material having a first free silicon proportion, which is the amount of free silicon by volume relative to the substrate (20) as a whole; and
a melt infiltration ceramic matrix composite outer layer (50) comprising a ceramic fiber reinforcement material in a ceramic matrix material having a second free silicon proportion disposed on an outer surface of at least a portion of said substrate, or a polymer impregnation and pyrolysis ceramic matrix composite outer layer comprising a ceramic fiber reinforcement material in a ceramic matrix material having a second free silicon proportion disposed on an outer surface of at least a portion of said substrate, wherein the second free silicon proportion is the amount of free silicon by volume relative to the outer layer (50) as a whole; and
wherein said substrate comprises between 5 percent and 30 percent free silicon by volume and has no porosity, and said outer layer comprises less than 5 percent free silicon by volume and has a porosity between 5 percent to 30 percent.

2. The ceramic matrix composite article of claim 1, wherein said substrate (20) comprises silicon carbide and free silicon, and said outer layer comprises pure silicon carbide.

3. The ceramic matrix composite article of claim 1 or claim 2, wherein said substrate (20) comprises silicon carbide and free silicon, and said outer layer comprises silicon carbide and free carbon.

4. The ceramic matrix composite article of any preceding claim, wherein said substrate (20) comprises between 5 percent and 30 percent free silicon by volume, and said outer layer comprises less than 5 percent free silicon by volume.

5. The ceramic matrix composite article of any preceding claim, wherein said substrate (20) comprises between 5 percent and 15 percent free silicon by volume, and said outer layer comprises 0 percent free silicon.

6. The ceramic matrix composite article of any preceding claim, wherein said substrate (20) has a first porosity, said outer layer has a second porosity, and said second porosity being greater than said first porosity.

7. The ceramic matrix composite article of any preceding claim, wherein said substrate has no porosity, and said outer layer comprises a porosity 5 percent to 30 percent.

8. The ceramic matrix composite article of any preceding claim, wherein said substrate comprises between 5 percent and 15 percent free silicon by volume and has no porosity, and said outer layer comprises 0 percent free silicon by volume and has a porosity between 5 percent and less than 10 percent.

9. The ceramic matrix composite article of any preceding claim, wherein said outer layer comprise a polymer impregnation pyrolysis ceramic matrix composite outer layer.

10. The ceramic matrix composite article of any preceding claim, wherein said outer layer comprises the melt infiltration outer layer formed after forming of the substrate.

11. The ceramic matrix composite article of any preceding claim, wherein said article is at least one of a turbine shroud, a turbine blade, and a turbine nozzle.

12. A method for forming a ceramic matrix composite article according to any one of claims 1 to 11, the method comprising:
forming a ceramic matrix composite substrate comprising a ceramic fiber reinforcement material in a ceramic matrix material having a first free silicon proportion by melt infiltration, wherein the first free silicon proportion is the amount of free silicon by volume relative to the substrate (20) as a whole;
forming a ceramic matrix composite outer layer comprising a ceramic fiber reinforcement material in a ceramic matrix material having a second free silicon proportion by melt infiltration or polymer impregnation and pyrolysis disposed on at least a portion of the substrate, wherein the second free silicon proportion is the amount of free silicon by volume relative to the outer layer (50) as a whole; and
wherein said substrate and said outer layer being melt infiltrated at the same time, and wherein free silicon of said outer layer being extracted or wherein said substrate and said outer layer being melt infiltrated at the same time, and wherein said substrate is formed from a first prepreg layup, said outer layer is formed from a second prepreg layup different from said first prepreg layup, wherein said substrate comprises between 5 percent and 30 percent free silicon by volume and has no porosity, and said outer layer comprises less than 5 percent free silicon by volume and has a porosity between 5 percent to 30 percent.

## Patentansprüche

1. Keramikmatrix-Verbundartikel (10), umfassend:
ein Keramikmatrix-Verbundsubstrat (20) zur Schmelzinfiltration, umfassend ein Keramikfaserverstärkungsmaterial in einem Keramikmatrixmaterial mit einem ersten Anteil an freiem Silizium, der die Menge an freiem Silizium pro Volumen relativ zu dem Substrat (20) als Ganzes darstellt; und
eine Keramikmatrix-Verbundaußenschicht (50) zur Schmelzinfiltration, umfassend ein Keramikfaserverstärkungsmaterial in einem Keramikmatrixmaterial mit einem zweiten Anteil an freiem Silizium, der auf einer Außenfläche von mindestens einem Teil des Substrats angeordnet ist, oder eine Keramikmatrix-Verbundaußenschicht zur Polymer-Imprägnierung und Pyrolyse, welche ein Keramikfaserverstärkungsmaterial in einem Keramikmatrixmaterial mit einem zweiten Anteil an freiem Silizium umfasst, der auf einer Außenfläche von mindestens einem Teil des Substrats angeordnet ist, wobei der zweite Anteil an freiem Silizium die Menge an freiem Silizium pro Volumen relativ zur äußeren Schicht (50) als Ganzes darstellt; und
wobei das Substrat zwischen 5 und 30 Vol.-% freies Silizium und keine Porosität aufweist und die äußere Schicht weniger als 5 Vol.-% freies Silizium und eine Porosität zwischen 5 und 30 Vol.-% aufweist.

2. Keramikmatrix-Verbundartikel nach Anspruch 1, wobei das Substrat (20) Siliziumkarbid und freies Silizium, und die Außenschicht reines Siliziumkarbid umfasst.

3. Keramikmatrix-Verbundartikel nach Anspruch 1 oder Anspruch 2, wobei das Substrat (20) Siliziumkarbid und freies Silizium umfasst und die äußere Schicht Siliziumkarbid und freien Kohlenstoff umfasst.

4. Keramikmatrix-Verbundartikel nach einem vorhergehenden Ansprüche, wobei das Substrat (20) zwischen 5 und 30 Vol.-% freies Silizium und die äußere Schicht weniger als 5 Vol.-% freies Silizium umfasst.

5. Keramikmatrix-Verbundartikel nach einem vorhergehenden Ansprüche, wobei das Substrat (20) zwischen 5 und 15 Vol.-% freies Silizium und die äußere Schicht 0 Vol.-% freies Silizium umfasst.

6. Keramikmatrix-Verbundartikel nach einem der vorhergehenden Ansprüche, wobei das Substrat (20) eine erste Porosität aufweist, die äußere Schicht eine zweite Porosität aufweist, und die zweite Porosität größer als die erste Porosität ist.

7. Keramikmatrix-Verbundartikel nach einem vorhergehenden Ansprüche, wobei das Substrat keine Porosität aufweist, und die äußere Schicht eine Porosität zwischen 5 Prozent und 30 Prozent aufweist.

8. Keramikmatrix-Verbundartikel nach einem der vorhergehenden Ansprüche, wobei das Substrat zwischen 5 und 15 Vol.-% freies Silizium umfasst und keine Porosität aufweist, und die äußere Schicht 0 Vol.-% freies Silizium umfasst und eine Porosität zwischen 5 Prozent und weniger als 10 Prozent aufweist.

9. Keramikmatrix-Verbundartikel nach einem der vorhergehenden Ansprüche, wobei die äußere Schicht eine Keramikmatrix-Verbundaußenschicht zur Polymer-Imprägnierung und Pyrolyse umfasst.

10. Keramikmatrix-Verbundartikel nach einem der vorhergehenden Ansprüche, wobei die äußere Schicht die äußere Schicht zur Schmelzinfiltration umfasst, die nach dem Bilden der Substrats gebildet wurde.

11. Keramikmatrix-Verbundartikel nach einem der vorhergehenden Ansprüche, wobei der Gegenstand wenigstens eines von einem Turbinenmantel, einer Turbinenschaufel und einer Turbinendüse ist.

12. Verfahren zur Herstellung eines Keramikmatrix-Verbundartikels nach einem der Ansprüche 1 bis 11, wobei das Verfahren Folgendes umfasst:
Ausbilden eines Keramikmatrix-Verbundsubstrats, das ein Keramikfaserverstärkungsmaterial in einem Keramikmatrixmaterial umfasst, welches einen ersten Anteil an freiem Silizium durch Schmelzinfiltration umfasst, wobei der erste Anteil an freiem Silizium die Menge an freiem Silizium pro Volumen relativ zu dem Substrat (20) als Ganzes darstellt;
Ausbilden einer Keramikmatrix-Verbundaußenschicht, die ein Keramikfaserverstärkungsmaterial in einem Keramikmatrixmaterial umfasst, welches einen zweiten Anteil an freiem Silizium durch Schmelzinfiltration oder Polymer-Imprägnierung und Pyrolyse aufweist, das auf mindestens einem Teil des Substrats angeordnet ist, wobei der zweite Anteil an freiem Silizium die Menge an freiem Silizium pro Volumen relativ zur Außenschicht (50) als Ganzes darstellt; und
wobei das Substrat und die äußere Schicht gleichzeitig schmelzinfiltriert werden und wobei das freie Silizium der äußeren Schicht extrahiert wird oder wobei das Substrat und die äußere Schicht gleichzeitig schmelzinfiltriert werden und wobei das Substrat aus einer ersten Prepreg-Schicht gebildet wird, wobei die äußere Schicht aus einer zweiten Prepreg-Schicht gebildet wird, die sich von der ersten Prepreg-Schicht unterscheidet, wobei das Substrat zwischen 5 und 30 Vol.-% freies Silizium und keine Porosität aufweist und die äußere Schicht weniger als 5 Vol.-% freies Silizium umfasst und eine Porosität zwischen 5% und 30% aufweist.

## Revendications

1. Article composite à matrice céramique (10) comprenant :
un substrat composite à matrice céramique à infiltration par fusion (20) comprenant un matériau de renforcement à fibres céramiques dans un matériau à matrice céramique ayant une première proportion de silicium libre, qui est la quantité de silicium libre en volume par rapport au substrat (20) dans son ensemble ; et
une couche externe composite (50) à matrice céramique à infiltration par fusion comprenant un matériau de renforcement à base de fibres céramiques dans un matériau à matrice céramique ayant une seconde proportion de silicium libre disposée sur une surface extérieure d'au moins une partie dudit substrat, ou une matrice céramique d'imprégnation de polymère et de couche externe composite à matrice céramique pyrolyse comprenant un matériau de renforcement de fibres céramiques dans un matériau de matrice céramique ayant une seconde proportion de silicium libre disposée sur une surface extérieure d'au moins une partie dudit substrat, la seconde proportion de silicium libre étant la quantité en volume de silicium libre par rapport à la couche externe (50) dans son ensemble ; et
dans lequel ledit substrat comprend entre 5% et 30% en volume de silicium libre et n'a aucune porosité, et ladite couche externe comprend moins de 5% en volume de silicium libre et présente une porosité comprise entre 5% et 30%.

2. Article composite à matrice céramique selon la revendication 1, dans lequel ledit substrat (20) comprend du carbure de silicium et du silicium libre, et ladite couche externe comprend du carbure de silicium pur.

3. Article composite à matrice céramique selon la revendication 1 ou la revendication 2, dans lequel ledit substrat (20) comprend du carbure de silicium et du silicium libre, et ladite couche externe comprend du carbure de silicium et du carbone libre.

4. Article composite à matrice céramique selon l'une quelconque des revendications précédentes, dans lequel ledit substrat (20) comprend entre 5% et 30% de silicium libre en volume, et ladite couche extérieure comprend moins de 5% de silicium libre en volume.

5. Article composite à matrice céramique selon l'une quelconque des revendications précédentes, dans lequel ledit substrat (20) comprend entre 5% et 15% de silicium libre en volume, et ladite couche externe comprend 0% de silicium libre.

6. Article composite à matrice céramique selon l'une quelconque des revendications précédentes, dans lequel ledit substrat (20) a une première porosité, ladite couche extérieure a une seconde porosité, et ladite seconde porosité est supérieure à ladite première porosité.

7. Article composite à matrice céramique selon l'une quelconque des revendications précédentes, dans lequel ledit substrat n'a pas de porosité, et ladite couche externe comprend une porosité de 5% à 30%.

8. Article composite à matrice céramique selon l'une quelconque des revendications précédentes, dans lequel ledit substrat comprend entre 5% et 15% de silicium libre en volume et n'a pas de porosité, et ladite couche externe comprend 0% de silicium libre en volume et a une porosité comprise entre 5% et moins de 10%.

9. Article composite à matrice céramique selon l'une quelconque des revendications précédentes, dans lequel ladite couche externe comprend une couche extérieure de composite à matrice céramique pyrolyse d'imprégnation de polymère.

10. Article composite à matrice céramique selon l'une quelconque des revendications précédentes, dans lequel ladite couche externe comprend la couche externe d'infiltration par fusion formée après la formation du substrat.

11. Article composite à matrice céramique selon l'une quelconque des revendications précédentes, dans lequel ledit article est au moins l'une parmi une enveloppe de turbine, une pale de turbine et une buse de turbine.

12. Procédé pour former un article composite à matrice céramique selon l'une quelconque des revendications 1 à 11, le procédé consistant à :
former un substrat composite à matrice céramique comprenant un matériau de renforcement de fibres céramiques dans un matériau à matrice céramique ayant une première proportion de silicium libre par infiltration par fusion, la première proportion de silicium libre étant la quantité en volume de silicium libre par rapport au substrat (20) dans son ensemble ;
former une couche externe composite à matrice céramique comprenant un matériau de renforcement de fibres céramiques dans un matériau à matrice céramique ayant une seconde proportion de silicium libre par infiltration par fusion ou une imprégnation de polymère et une pyrolyse disposée sur au moins une partie du substrat, la seconde proportion de silicium libre étant la quantité de silicium libre en volume par rapport à la couche externe (50) dans son ensemble ; et
dans lequel ledit substrat et ladite couche externe sont infiltrés par fusion en même temps, et dans lequel le silicium libre de ladite couche externe est extrait ou dans lequel ledit substrat et ladite couche externe sont infiltrés en fusion en même temps, et dans lequel ledit substrat est formé à partir d'une première une couche de pré-imprégné, ladite couche extérieure est formée à partir d'une seconde couche de pré-imprégné différente de ladite première couche de pré-imprégné, dans laquelle ledit substrat comprend entre 5% et 30% en volume de silicium libre en volume et n'a aucune porosité, et ladite couche extérieure comprend moins de 5% en silicium libre volume et une porosité comprise entre 5% et 30%.
